Europäisches Patentamt

European Patent Office

Office européen des brevets

(19)

(11) Veröffentlichungsnummer: **0 401 645 B1**

(12) # EUROPÄISCHE PATENTSCHRIFT

(45) Veröffentlichungstag der Patentschrift: **26.07.95**

(51) Int. Cl.⁶: **C09F 1/04**, D21H 17/62

(21) Anmeldenummer: **90110169.1**

(22) Anmeldetag: **29.05.90**

Die Akte enthält technische Angaben, die nach
dem Eingang der Anmeldung eingereicht wurden
und die nicht in dieser Patentschrift enthalten sind.

(54) **Modifizierte Kolophoniumharze, Verfahren zu ihrer Herstellung, ihre Verwendung und solche Kolophoniumharze enthaltende Papierleimungsmittel.**

(30) Priorität: **08.06.89 AT 1417/89**

(43) Veröffentlichungstag der Anmeldung:
**12.12.90 Patentblatt 90/50**

(45) Bekanntmachung des Hinweises auf die
Patenterteilung:
**26.07.95 Patentblatt 95/30**

(84) Benannte Vertragsstaaten:
**BE CH DE ES FR GB IT LI NL SE**

(56) Entgegenhaltungen:
**EP-A- 0 150 754**
**FR-A- 1 589 054**

(73) Patentinhaber: **Krems Chemie Aktiengesellschaft**
**Hafenstrasse 77**
**A-3500 Krems (AT)**

(72) Erfinder: **Fallmann, Johannes, Dr.**
**Admonterstrasse 20/13**
**A-3502 Krems (AT)**
Erfinder: **Streicher, Wolfgang, Dr.**
**Peter-Jordan-Strasse 189**
**A-1180 Wien (AT)**
Erfinder: **Ronge, Helmut, Dr.**
**Mühlhofstrasse 30/18**
**A-3500 Krems (AT)**

(74) Vertreter: **Pfeifer, Otto, Dipl.-Ing. et al**
**Patentanwälte Schütz und Partner,**
**Fleischmanngasse 9**
**A-1040 Wien (AT)**

**Beschreibung**

Die vorliegende Erfindung betrifft auf spezielle Weise modifizierte Kolophoniumharze, die mit $\alpha,\beta$-ungesättigten Carbonylverbindungen verstärkt und durch wasserabspaltende Mittel in die entsprechenden intermolekularen Harzsäureanhydride übergeführt sind, ein Verfahren zur Herstellung solcher speziell modifizierten Kolophoniumharze, ihre Verwendung als Papierleimungsmittel und Papierleimungsmittel in Form wäßriger Dispersionen, die solche speziell modifizierten Kolophoniumharze enthalten.

Die Verwendung von wäßrigen, Kolophoniumharze enthaltenden Dispersionen zur Leimung von Papieren ist seit langem bekannt und wird z.B. in Casey; Pulp and Paper, 2. Auflage, Band II: Papermaking, Seiten 1043 bis 1066, Interscience Publishers, New York, 1961, beschrieben. Die Kolophoniumharze, z.B Wurzelharz, Balsamharz, Tallharz und ähnliche werden dabei üblicherweise verstärkt, d.h. mit $\alpha,\beta$-ungesättigten Carbonylverbindungen oder Formaldehyd umgesetzt, bevor sie zu Dispersionen verarbeitet werden. Diese Verstärkung soll die Ergiebigkeit des Leimungsmittels steigern und, im Falle des Formaldehyds, eine gegebenenfalls vorhandene Kristallisationsneigung vermindern. Die Umsetzung der Kolophoniumharze mit $\alpha,\beta$-ungesättigten Carbonylverbindungen, beispielsweise mit Acrylsäure, Fumarsäure, Maleinsäure oder deren zugänglichen Anhydriden, beruht auf einer Adduktbildung nach Diels-Alder mit im Kolophoniumharz enthaltenen Harzsäuren geeigneter Struktur, beispielsweise mit Lävopimarsäure.

Sämtliche bisher bekannten Papierleime, die in der genannten Weise verstärkte Harze enthalten, werden bei der technischen Papierherstellung im sauren Bereich angewendet, im allgemeinen bei pH-Werten unterhalb 6. Bei höheren pH-Werten, z.B. noch bei pH-Werten zwischen 6 und 7, treten erhebliche Probleme auf, vor allem, wenn man Kreide als preisgünstigen Füllstoff oder kreidehaltigen Streichereiausschuß verwenden will. So kann es zu beträchtlichen Qualitätsunterschieden in der Papierbahn kommen, die von variablen kreidehaltigen Ausschußmengen herrühren, die auf unterschiedliche Aluminiumsulfat-Zusätze zurückgehen, die ihrerseits zur Konstanthaltung des pH-Wertes notwendig sind Verringerte Korrosionsgefahr und die Einsparung von Mahlungsenergie, wie im alkalischen pH-Bereich, kommen im pH-Intervall zwischen 6 und 7 noch nicht voll zum Tragen.

Die Arbeitsweise im stärker sauren Bereich ist in Anwesenheit von Kreide überhaupt mit erheblichen Nachteilen verbunden. So können dort durch Reaktion von Kalziumcarbonat mit Aluminiumsulfat scharfkantige Gipskristalle gebildet werden, die das fertige Papier durch Rakelstreifen oder Schnitte unbrauchbar machen und die polierten Zylinder der Papiermaschine beschädigen können. Außerdem kann sich im sauren Bereich Kalziumcarbonat in lösliches Kalziumhydrogencarbonat verwandeln, was zu einer Erhöhung des Härtegrades im Kreislaufwasser der Papiermaschine führt. Daher kann im sauren Bereich als Füllstoff nur das relativ teure Kaolin, nicht jedoch die preisgünstigere Kreide oder kreidehaltige Ausschußprodukte aus Streichereien verwendet werden. Der Hauptnachteil der Leimung im sauren Bereich ist jedoch wie z.B. J. Kaltenbach in "Die neuzeitliche Papierleimung", 2. Auflage (1974), Verlag Dr. Martin Sändig GmbH, Walluf, Seite 219, ausführt, die begrenzte Alterungsbeständigkeit des geleimten Papiers, da Säurereste zum Vergilben und Brüchigwerden des Papieres führen.

Durch eine sogenannte Neutralleimung, d.h. eine Leimung im pH-Bereich um oder oberhalb 7, können diese Nachteile vermieden werden, jedoch kann dann der Großteil bisher bekannter Harzleime nicht mehr eingesetzt werden. Für die Neutralleimung im technischen Maßstab werden bisher vorwiegend synthetisch hergestellte Leimungsmittel eingesetzt, beispielsweise Dispersionen, die langkettige dimere Alkylketene enthalten.

Wie W. Kamutzki und Th. Krause im "Wochenblatt für Papierfabrikationen", Heft 7 (1983), Seiten 215 bis 222 anmerken, weisen solche Leimungsmittel jedoch den schwerwiegenden Nachteil auf, daß sie mit dem in Papierfabriken für vielfältige Zwecke eingesetzten Aluminiumsulfat nicht verträglich sind. Außerdem können Teilleimungen mit solchen Leimungsmitteln nur mit großen Schwierigkeiten durchgeführt werden.

Es sind einige Beispiele von Harzleimung im quasi neutralen oder alkalischen Bereich, z.B. bei pH-Werten von 6 bis 9, bekannt geworden, wobei in einer eigenen älteren Patentanmeldung (EP-OS 0 150 754) als erstes ein solches Leimungssystem mit guten Ergebnissen genannt wird. Diesem Papierleimungsmittel liegt ein modifiziertes Kolophoniumharz zu Grunde, das mit Formaldehyd und/oder $\alpha,\beta$-ungesättigten Carbonylverbindungen verstärkt und gleichzeitig mit 2,5 bis 10 Gew.-% eines oder mehrerer Aminoalkohole, bezogen auf das Ausgangsharz, verestert ist. Die DE-PS 3 630 268 zitiert ein ähnliches Prinzip unter Verwendung spezieller Emulgatorsysteme. Die chemische Grundlage ist in beiden Fällen eine Senkung der Säurezahl des vormodifizierten Leimharzes durch Veresterung vorzugsweise mit Aminoalkoholen. Eine analoge Methode ist in der DE-PS 3 708 854 beschrieben, die auf Veresterung mit mehrwertigen Alkoholen, im speziellen mit Glycerin, basiert.

Die US-PS 3 658 891 beschreibt die Herstellung von Maleopimarsäure, das ist mit einem Lävopimarsäure enthaltenem Harz umgesetztes Maleinsäureanhydrid. Solche Umsetzungen werden in gegebenenfalls wasserhaltiger Essigsäure durchgeführt. Zu einer Bildung von intermolekularen Harzsäureanhydriden kann es dabei nicht kommen, weil keine dehydratisierenden Bedingungen (z.B. Gegenwart von Essigsäureanhydrid) eingehalten werden.

Die US-PS 3 463 768 betrifft die Umsetzung eines Harzes in Abwesenheit eines sauren Katalysators mit Formaldehyd, gefolgt von der Zugabe eines sauren Dehydratisierungskatalysators, z.B. Schwefelsäure, Phosphorsäure oder p-Toluolsulfonsäure. Diese Katalysatoren bewirken die Dehydratisierung von Methylolgruppen und führen nicht zur Bildung intermolekularer Harzsäureanhydride.

Es wurden nun modifizierte Kolophoniumharze gefunden, die dadurch gekennzeichnet sind, daß sie mit $\alpha,\beta$-ungesättigten Carbonylverbindungen verstärkt und zusätzlich mit wasserabspaltenden Mitteln teilweise oder zur Gänze zu den entsprechenden intermolekularen Harzsäureanhydriden dehydratisiert sind. Letzteres erfolgt vorzugsweise durch Umsetzung mit Essigsäureanhydrid. Die Herstellung von intermolekularen Harzsäureanhydriden durch Behandlung mit Essigsäureanhydrid und deren Anwendung in Dispersionsleimen ist bereits in der US-PS 3 582 464 beschrieben. Diese Patentschrift beschränkt sich jedoch explizit auf Kolophoniumharze (Wurzelharz, Balsamharz und Tallharz in verschiedenen Reinheiten), sowie auf hydrierte, polymerisierte oder mit Formaldehyd behandelte Harze. Die Verwendung von Addukten der genannten Harztypen mit $\alpha,\beta$-ungesättigtenCarbonylverbindungen ist nicht angeführt.

Das wesentliche Merkmal der vorliegenden Erfindung ist, daß zusätzlich zu einer Verstärkung mit $\alpha,\beta$-ungesättigten Carbonylverbindungen eine intermolekulare Anhydridbildung des Kolophoniumharzes erfolgt. Die Adduktbildung nach Diels-Alder kann dabei vor oder nach der Dehydratisierungsstufe angesetzt werden.

Wie aus den Beispielen ersichtlich ist, führt nur die Kombination beider Reaktionsschritte zu besten Leimungsergebnissen.

Die erfindungsgemäß modifizierten Kolophoniumharze können sich von den üblichen Kolophoniumharzen, insbesondere von Balsamharz, Tallharz oder beliebigen Mischungen solcher Harze ableiten. Diese Kolophoniumharze können auch vorbehandelt worden sein, z.B. einer Disproportionierung oder einer Behandlung mit Formaldehyd unterworfen worden sein. Ferner können den Ausgangsharzen übliche Streckmittel, beispielsweise Wachse und/oder minderwertige Tallölderivate bis etwa 10 Gew.-%, bezogen auf das Ausgangsharz, beigemengt sein.

Die Verstärkung mit $\alpha,\beta$-ungesättigten Carbonylverbindungen kann auf übliche Weise durchgeführt worden sein, beispielsweise mit Fumarsäure, Maleinsäure, Maleinsäureanhydrid oder Mischungen davon. Beispielsweise kann man von 3 bis 12 Gew.-% $\alpha,\beta$-ungesättigte Verbindungen, bezogen auf das Ausgangsharz, einsetzen. Geeignete Reaktionstemperaturen für die Verstärkung sind beispielsweise solche im Bereich von 170 bis 250°C. Wenn eine zusätzliche Behandlung mit Formaldehyd vorgenommen wird, gelangen z.B. 0,5 bis 2 Gew.-% Formaldehyd, bezogen auf das Ausgansharz, zum Einsatz.

Die vorerwähnten üblichen Streckmittel können nicht nur dem Ausgangsharz zugefügt sein, sondern auch zu einem beliebigen Zeitpunkt, beispielsweise nach der Verstärkung und/oder nach der Anhydridbildung zugefügt werden. Der Zusatz von Streckmitteln kann auch unterbleiben.

Die Herstellung des intermolekularen Anhydrides kann mit wasserabspaltenden Mitteln durchgeführt werden und erfolgt vorzugsweise mit Essigsäureanhydrid. Die dabei entstehende Essigsäure wird zweckmäßigerweise aus dem Reaktionsgemisch abdestilliert.

Essigsäureanhydrid kann beispielsweise in einer Menge von 3 bis 62 Gew.-%, bezogen auf das Ausgangsharz, eingesetzt werden. Bevorzugt beträgt diese Menge 15 bis 20 Gew.-%; die Harzsäuren liegen damit teilweise oder zur Gänze als intermolekulare Anhydride vor.

Geeignete Umsetzungstemperaturen für die intermolekulare Anhydridbildung sind beispielsweise solche im Bereich von 100 bis 140° C, vorzugsweise im Bereich von 120 bis 140° C. Die Dehydratisierung wird vorzugsweise solange durchgeführt, bis die Säurezahl des Reaktionsgemisches nach Abtrennen der Essigsäure konstant bleibt.

Die Abtrennung der entstandenen Essigsäure kann durch Destillation erfolgen und kann unter Vakuum oder bei Normaldruck durchgeführt werden. Als vorteilhaft erwies sich Einblasen von Stickstoff, um Restessigsäure vollständig aus dem Harz auszutreiben. Die Sumpftemperaturen können dabei im Bereich von 200 bis 250° C liegen.

Die vorliegende Erfindung betrifft weiterhin die Verwendung der vorstehend beschriebenen speziell modifizierten Kolophoniumharze zur Herstellung von Papierleimungsmitteln. Die Papierleimungsmittel können dabei auf an sich bekannte Weise hergestellt werden, lediglich mit dem Unterschied, daß an Stelle der bekannten Harze die vorstehend beschriebenen verwendet werden, die mit $\alpha,\beta$-ungesättigten Carbonylverbindungen verstärkt und zusätzlich mit wasserabspaltenden Mitteln teilweise oder zur Gänze in die entsprechenden intermolekularen Anhydride übergeführt sind.

Die vorliegende Erfindung betrifft weiterhin Papierleimungsmittel in Form wäßriger Dispersionen, die dadurch gekennzeichnet sind, daß sie die vorstehend beschriebenen modifizierten Kolophoniumharze enthalten, als Kolophoniumharze, die mit $\alpha,\beta$-ungesättigten Carbonylverbindungen verstärkt und zusätzlich mit wasserabspaltenden Mitteln teilweise oder zur Gänze in die entsprechenden intermolekularen Anhydride übergeführt sind.

Die Herstellung der erfindungsgemäßen Papierleimungsmittel kann auf an sich bekannte Weise erfolgen, beispielsweise nach dem sogenannten Inversionsverfahren. Bei diesem wird das Harz bei Temperaturen von beispielsweise 120 bis 180° C unter kräftigem Rühren und unter Zusatz von wäßrigem Alkali, beispielsweise Natronlauge, Kalilauge und/oder wäßriger Boraxlösung und/oder Emulgatoren zunächst in eine Wasser-in-Öl-Emulsion überführt, die dann durch Zugabe von Wasser invertiert, d.h. in eine Öl-in-Wasser-Emulsion umgewandelt wird. Dabei sollte eine zu starke thermische Behandlung des Harzes in Kontakt mit Wasser vermieden werden, da ansonsten bereits eine Hydrolyse des intermolekularen Anhydrides eintreten kann, wodurch die Leimungseffektivität sinken kann.

Als alternatives Verfahren kann eine Dispergierung nach Lösen in einem mit Wasser nicht mischbaren Lösungsmittel und dessen anschließende destillative Abtrennung angewandt werden. Eine ausführliche Beschreibung anwendbarer Emulgiermethoden und Emulgatorsysteme ist in der US-PS 3 582 464 enthalten.

Die erfindungsgemäß modifizierten Kolophoniumharze und diese enthaltenden Papierleimungsmittel haben eine Reihe von überraschenden Vorteilen. Sie können für Leimungen im sauren, neutralen und alkalischen Bereich, z.B. in einem pH-Bereich von 4 bis 9, vorzugsweise 6 bis 9 und besonders bevorzugt von 6,5 bis 8, eingesetzt werden und zeichnen sich vor allem im höheren Temperaturbereich durch gute Leimungsergebnisse aus. Die erfindungsgemäß modifizierten Harze können sowohl für Voll- als auch für Teilleimungen in der Masse verwendet werden. Sie vereinigen die Vorteile von Harzleimen, z.B. deren Verträglichkeit mit Aluminiumsulfat, mit der Möglichkeit, die Leimung im neutralen bis schwach alkalischen Bereich durchzuführen, bei der das teure Kaolin durch billigere Kreide oder kreidehaltigen Ausschuß aus Streichereien ersetzt werden kann, und bei der keine Gipsbildung aus Kreide und Aluminiumsulfat, sowie keine Bildung von Kalziumhydrogencarbonat erfolgt und vor allem die Alterungsbeständigkeit des Papiers durch Zurückdrängung der Vergilbung und das Brüchigwerdens stark erhöht wird. Für Leimungen im pH-Bereich von 6 bis 9 unter Verwendung der erfindungsgemäß modifizierten Harze kann Aluminiumsulfat als alleiniges Fällungsmittel eingesetzt werden. Ferner kann auftretenden Schwierigkeiten, wie z.B. schädlichem Harz, das sind zellstoffbedingte Harzablagerungen an Gautsch- oder Trockenzylindern - sogenannte Schälstoffe - durch Leimung im sauren Bereich und Erhöhung des Aluminiumsulfat-Zusatzes begegnet werden.

Die folgenden Beispiele erläutern die vorliegende Erfindung, ohne sie in irgendeiner Weise zu beschränken.

Beispiele

Beispiel 1

100 Gew.-Teile Tallharz mit einer Säurezahl von 170 wurden auf 210° C erhitzt und 10 Gew.-Teile Fumarsäure zugesetzt. Es wurde eine Stunde bei dieser Temperatur gehalten und schließlich auf 140° C abgekühlt. Nach Zugabe von 32 Gew.-Teilen Essigsäureanhydrid wurde 5 Stunden bei 140° C dehydratisiert und anschließend entstandene Essigsäure im Wasserstrahlvakuum abdestilliert. Das so modifizierte Harz hatte eine Säurezahl von 82 und einen Erweichungspunkt von 74° C.

Beispiel 2

100 Gew.-Teile Tallharz mit einer Säurezahl von 170 wurden auf 210° C erhitzt und 10 Gew.-Teilen Fumarsäure zugesetzt. Es wurde eine Stunde bei dieser Temperatur gehalten und anschließend auf 140° C abgekühlt. Nach Zugabe von 15,5 Gew.-Teilen Essigsäureanhydrid wurde 5 Stunden bei 140° C dehydratisiert und anschließend entstandene Essigsäure unter Normaldruck abdestilliert. Um letzte Reste an Essigsäure aus dem Harz zu entfernen, wurde gegen Ende der Destillation mit Stickstoff gespült. Das so modifizierte Harz hatte eine Säurezahl von 147 und einen Erweichungspunkt von 78° C.

Beispiel 3

100 Gew.-Teile Tallharz mit einer Säurezahl von 170 wurden auf 140° C erhitzt und mit 32 Gew.-Teilen Essigsäureanhydrid 5 Stunden bei dieser Temperatur dehydratisiert. Nach Abdestillieren entstandener Essigsäure im Wasserstrahlvakuum erhielt man ein Harz mit einer Säurezahl von 51 und einem Erweichungspunkt von 41° C. Dieses wurde auf 210° C erhitzt, 9,2 Gew.-Teile Maleinsäureanhydrid zugesetzt und eine Stunde bei dieser Temperatur gehalten. Das erhaltene Harz hatte eine Säurezahl von 85 und einen Erweichungspunkt von 69° C.

Beispiel 4

100 Gew.-Teile Tallharz mit einer Säurezahl von 170 wurden auf 210° C erhitzt und 8,5 Gew.-Teile Maleinsäureanhydrid zugesetzt. Es wurde eine Stunde bei dieser Temperatur gehalten und schließlich auf 140° C abgekühlt. Nach Zugabe von 15,5 Gew.-Teilen Essigsäureanhydrid wurde 5 Stunden bei 140° C dehydratisiert und anschließend die entstandene Essigsäure unter Normaldruck und Stickstoffspülung abdestilliert. Das so modifizierte Harz hatte eine Säurezahl von 93 und einen Erweichungspunkt von 73° C.

Beispiel 5

Es wurde verfahren wie im Beispiel 4, jedoch wurden 18,5 Gew.-Teile Essigsäureanhydrid eingesetzt. Das erhaltene Harz hatte eine Säurezahl von 81 und einen Erweichungspunkt von 76° C.

Beispiel 6

Es wurde verfahren wie im Beispiel 4, jedoch wurden 23 Gew.-Teile Essigsäureanhydrid eingesetzt. Das modifizierte Harz hatte eine Säurezahl von 73 und einen Erweichungspunkt von 66° C.

Beispiel 7

Es wurde verfahren wie im Beispiel 4, jedoch wurden 32 Gew.-Teile Essigsäureanhydrid eingesetzt. Das so modifizierte Harz hatte eine Säurezahl von 60 und einen Erweichungspunkt von 69° C.

Beispiel 8

Es wurde verfahren wie im Beispiel 4, jedoch wurden 23 Gew.-Teile Essigsäureanhydrid eingesetzt und 2 Stunden bei 140° C dahydratisiert. Das erhaltene Harz hatte eine Säurezahl von 67 und einen Erweichungspunkt von 68° C.

Beispiel 9

Es wurde verfahren wie im Beispiel 4, jedoch wurden 23 Gew.-Teile Essigsäureanhydrid eingesetzt und eine Stunde bei 140° C dehydratisiert. Das erhaltene Harz hatte eine Säurezahl von 75 und einen Erweichungspunkt von 73° C.

Beispiel 10

Es wurde verfahren wie im Beispiel 9, mit dem Unterschied, daß an Stelle von Tallharz Balsamharz mit einer Säurezahl von 153 eingesetzt wurde. Nach Verstärkung und Dehydratisierung wurde ein Harz mit einer Säurezahl von 80 und einem Erweichungspunkt von 98° C erhalten.

Beispiel 11

100 Gew.-Teile Tallharz mit einer Säurezahl von 170 wurden auf 210° C erhitzt und 10 Gew.-Teile Maleinsäureanhydrid zugesetzt. Es wurde eine Stunde bei dieser Temperatur gehalten und schließlich auf 140° C abgekühlt. Nach Zugabe von 23 Gew.-Teilen Essigsäureanhydrid wurde eine Stunde bei 140° C dehydratisiert und anschließend entstandene Essigsäure unter Normaldruck abdestilliert. Um letzte Reste an Essigsäure aus dem Harz zu entfernen, wurde während der Destillation mit Stickstoff gespült. Das so modifizierte Harz hatte eine Säurezahl von 88 und einen Erweichungspunkt von 66° C.

Beispiel 12

Es wurde verfahren wie im Beispiel 11, jedoch wurden 12 Gew.-Teile Maleinsäureanhydrid eingesetzt. Das erhaltene Harz hatte eine Säurezahl von 95 und einen Erweichungspunkt von 69° C.

Beispiel 13

Es wurde verfahren wie im Beispiel 11, jedoch wurden 12 Gew.-Teile Maleinsäureanhydrid eingesetzt und 3 Stunden bei 140° C dehydratisiert. Das erhaltene Harz hatte eine Säurezahl von 90 und einen Erweichungspunkt von 78° C.

Beispiel 14

Es wurde verfahren wie im Beispiel 11, jedoch wurden 14 Gew.-Teile Maleinsäureanhydrid eingesetzt. Das erhaltene Harz hatte eine Säurezahl von 101 und einen Erweichungspunkt von 77° C.

Beispiel 15

Es wurde verfahren wie im Beispiel 11, jedoch wurden 6 Gew.-Teile Maleinsäureanhydrid eingesetzt. Das erhaltene Harz hatte eine Säurezahl von 60 und einen Erweichungspunkt von 61° C.

Beispiel 16 (zum Vergleich)

Harz nach US-PS 3 582 464

100 Gew.-Teile eines Tallharzes mit einer Säurezahl von 170 wurden 5 Stunden bei 140° C mit 23 Gew.-Teilen Essigsäureanhydrid dehydratisiert. Anschließend wurde entstandene Essigsäure unter Normaldruck mit Stickstoffspülung abdestilliert. Das so modifizierte Harz hatte eine Säurezahl von 22 und einen Erweichungspunkt von 52° C.

Beispiel 17

Jeweils 100 Gew.-Teile der gemäß den Beispielen 1 bis 16 hergestellten Harze wurden bei Raumtemperatur mit 50 Gew.-Teilen Toluol versetzt und unter Rühren und leichtem Erhitzen (max. 80° C) gelöst. Nach Eintragen von 5 Gew.-Teilen Emulgator (Derivate von Phenolpolyglycolethern) wurden mit jeweils 250 Teilen Wasser unter heftigem Rühren Voremulsionen hergestellt und im Druckdispergator bei 300 bis 400 bar homogenisiert. Durch azeotropes Ausschleppen von Wasser und Toluol im Vakuum wurden stabile Leimdispersionen mit Feststoffgehalten von 30 % erhalten.

Beispiel 18

100 Gew.-Teile des gemäß dem Beispiel 6 hergestellten Harzes wurden bei 130° C in einer Bewoidmühle aufgeschmolzen und unter heftigem Rühren mit 8 Gew.-Teilen Emulgator (Derivate von Phenolpolyglycolethern) versetzt. Durch dosierte Zugabe von insgesamt 210 Gew.-Teilen Wasser wurde die anfänglich gebildete Wasser in Öl-Emulsion schließlich in eine Öl in Wasser-Emulsion invertiert. Die so erhaltene wäßrige Dispersion war stabil und hatte einen Feststoffgehalt von 30 bis 31 Gew.-%.

Beispiel 19

Zur Überprüfung der Qualität der gemäß den Beispielen 17 und 18 hergestellten Dispersionen wurden kreisrunde Papierprüfblätter von 20 cm Durchmesser auf einer Blattbildeanlage der Firma Gockel, München, Typ G 8 E, hergestellt. Die Fertigung der Prüfblätter wurde bei pH 7,3 mit verschiedener Leimmenge, gerechnet als Festharz auf atro Papier unter Verwendung von Kreide als Füllstoff, durchgeführt. Der eingesetzte Zellstoff bestand aus einem Verhältnis Fichte : Buche von 70 : 30 und wies einen Mahlgrad von 30° SR auf. Einer 0,25 Gew.-%igen Suspension des Zellstoffes in Wasser mit Kreide als Füllstoff wurde die notwendige Leimmenge und gegebenenfalls ein Retentionsmittel zugesetzt. Dann erfolgte der Zusatz einer Aluminiumsulfatlösung in einer Menge von 1 Gew.-% Aluminiumsulfat fest auf atro Papier, um den pH-Wert auf 7,2 bis 7,4 einzustellen. Nach dem Absaugen des Verdünnungswassers wurde das Faservlies bei 70° C auf einen Feuchtigkeitsgehalt von ca. 40 % vorgetrocknet und anschließend am Trockenzylinder bei 115° C fertig getrocknet. Die fertigen Prüfblätter wurden einem Cobb-Test 60 unterworfen.

Die Ergebnisse sind in Tabelle 1 zusammengestellt.

Zur Leimung wurden die gemäß den Beispielen 17 und 18 hergestellten Dispersionen verwendet.

Aluminiumsulfat/Papier: 1 %
pH-Wert: 7,3

Tabelle 1

Wasseraufnahmevermögen in g pro m² (Cobb-Wert)

| Dispersion nach Beispiel 17 aus Harz gemäß Beispiel | 0,8 % Leim atro 20°C | 0,8 % Leim atro 45°C | 0,8 % Leim atro 50°C | 0,6 % Leim atro 20°C | 0,6 % Leim atro 45°C | 0,6 % Leim atro 50°C | 0,4 % Leim atro 20°C | 0,4 % Leim atro 45°C | 0,4 % Leim atro 50°C |
|---|---|---|---|---|---|---|---|---|---|
| 1 | 19,2 | 22,9 | 24,3 | 25,6 | 22,5 | 29,6 | 57,4 | 52,8 | 54,4 |
| 2 | | | | 17,5 | 21,5 | 34,9 | - | - | 83,7 |
| 3 | 21,7 | 24 | | | | | | | |
| 4 | | | | 21,9 | 21,2 | 27,6 | 27,0 | 29,2 | 41,7 |
| 5 | | | | 19,8 | 23,1 | 28,7 | 28,2 | 34,0 | 33,8 |
| 6 | | | | 20,0 | 21,8 | 23,1 | 25,7 | 26,2 | 27,8 |
| 7 | | | | | 23,9 | 23,1 | 28,6 | 25,8 | 27,8 |
| 8 | | | | - | 21,6 | 22,8 | 23,9 | 25,4 | 26,5 |
| 9 | | | | 22,1 | 25,6 | 25,5 | 29,0 | 28,6 | 30,5 |
| 10 | | | | 24,8 | 28,2 | 35,5 | 31,1 | 39,6 | 46,8 |
| 11 | | | | 18,9 | 20,9 | 24,7 | 28,4 | 25,0 | 26,3 |
| 12 | | | | 20,5 | 21,8 | 22,8 | 23,5 | 25,7 | 25,8 |
| 13 | | | | 19,6 | 21,6 | 22,8 | 22,8 | 24,6 | 26,8 |
| 14 | | | | 19,3 | 22,5 | 21,9 | 24,2 | 23,5 | 28,2 |
| 15 | | | | 21,9 | 23,7 | 22,6 | 27,3 | 27,5 | 28,6 |
| 16 | 43,0 | 73,5 | - | | | | | | |
| Dispersion nach Bsp. 18 aus Harz gemäß Bsp. 6 | | | | 28,7 | 23,7 | | 49,1 | 32,0 | 36,6 |

Die Dispersion des Harzes aus Beispiel 16 ist nicht erfindungsgemäß.

# EP 0 401 645 B1

**Patentansprüche**

**Patentansprüche für folgende Vertragsstaaten : BE, CH, DE, FR, GB, IT, LI, NL, SE**

1. Modifizierte Kolophoniumharze, dadurch gekennzeichnet, daß Kolophoniumharze, insbesondere Tallharz und/oder Balsamharz, mit $\alpha,\beta$-ungesättigten Carbonylverbindungen verstärkt und zusätzlich mit wasserabspaltenden Mitteln teilweise oder zur Gänze zu den entsprechenden intermolekularen Harzsäureanhydriden dehydratisiert sind.

2. Verfahren zur Herstellung von modifizierten Kolophoniumharzen nach Anspruch 1, dadurch gekennzeichnet, daß man gegebenenfalls vorbehandelte Kolophoniumharze, insbesondere Tallharz und/oder Balsamharz, in beliebiger Reihenfolge mit $\alpha,\beta$-ungesättigten Carbonylverbindungen verstärkt und mit wasserabspaltenden Mitteln teilweise oder zur Gänze in die entsprechenden intermolekularen Anhydride überführt.

3. Verwendung von mit $\alpha,\beta$-ungesättigten Carbonylverbindungen verstärkten und zusätzlich durch wasserabspaltende Mittel teilweise oder zur Gänze in die entsprechenden intermolekularen Anhydride übergeführten Kolophoniumharzen nach Anspruch 1 zur Herstellung von Papierleimungsmitteln.

4. Papierleimungsmittel in Form wäßriger Dispersionen, dadurch gekennzeichnet, daß sie modifizierte Kolophoniumharze nach Anspruch 1 enthalten.

**Patentansprüche für folgenden Vertragsstaat : ES**

1. Verfahren zur Herstellung von modifizierten Kolophoniumharzen, dadurch gekennzeichnet, daß man gegebenenfalls vorbehandelte Kolophoniumharze, insbesondere Tallharz und/oder Balsamharz, in beliebiger Reihenfolge mit $\alpha,\beta$-ungesättigten Carbonylverbindungen verstärkt und mit wasserabspaltenden Mitteln teilweise oder zur Gänze in die entsprechenden intermolekularen Anhydride überführt.

2. Verwendung von nach Anspruch 1 erhaltenen modifizierten Kolophoniumharzen zur Herstellung von Papierleimungsmitteln.

3. Papierleimungsmittel in Form wäßriger Dispersionen, dadurch gekennzeichnet, daß sie nach Anspruch 1 hergestellte modifizierte Kolophoniumharze enthalten.

**Claims**

**Claims for the following Contracting States : BE, CH, DE, FR, GB, IT, LI, NL, SE**

1. Modified colophony resins, characterized in that colophony resins, especially tall resin and/or balsam resin, are strengthened with $\alpha,\beta$-unsaturated carbonyl compounds and additionally dehydrated with dehydrating agents, in part or in toto, to give the corresponding intermolecular resin acid anhydrides.

2. Process for preparing the modified colophony resins of claim 1, characterized in that optionally pretreated colophony resins, especially tall resin and/or balsam resin, are strengthened with $\alpha,\beta$-unsaturated carbonyl compounds and converted with dehydrating agents, in part or in toto, into the corresponding intermolecular anhydrides in any sequence.

3. The use of colophony resins, which have been strengthened with $\alpha,\beta$-unsaturated carbonyl compounds and additionally converted with dehydrating agents, in part or in toto, into the corresponding intermolecular anhydrides, according to claim 1, for the preparation of paper-sizing agents.

4. Paper-sizing agents in the form of aqueous dispersions, characterized by comprising modified colophony resins according to claim 1.

**Claims for the following Contracting State : ES**

1. Process for preparing modified colophony resins, characterized in that optionally pretreated colophony resins, especially tall resin and/or balsam resin, are strengthened with $\alpha,\beta$-unsaturated carbonyl compounds and converted with dehydrating agents, in part or in toto, into the corresponding intermolecular anhydrides in any sequence.

2. The use of modified colophony resins, obtained according to claim 1, for the preparation of paper-sizing agents.

3. Paper-sizing agents in the form of aqueous dispersions, characterized by comprising modified colophony resins, prepared according to claim 1.

**Revendications**

**Revendications pour les Etats contractants suivants : BE, CH, DE, FR, GB, IT, LI, NL, SE**

1. Résines de colophane modifiées, caractérisées en ce que des résines de colophane, notamment de la résine d'huile de pin et/ou de la résine balsamique, sont renforcées avec des composés carbonyle $\alpha$, $\beta$ insaturés et sont en outre déshydratées au moyen d'agents de déshydratation, partiellement ou totalement, en vue d'obtenir les anhydrides d'acide de résines intermoléculaires correspondants.

2. Procédé de préparation de résines de colophane modifiées selon la revendication 1, caractérisé en ce que l'on renforce les résines de colophane le cas échéant préalablement traitées, notamment la résine d'huile de pin et/ou la résine balsamique, dans un ordre quelconque, avec des composés carbonyle $\alpha$, $\beta$ insaturés et on les transforme au moyen d'agents de déshydratation, partiellement ou totalement, en anhydrides intermoléculaires correspondants.

3. Utilisation de résines de colophane selon la revendication 1, renforcées au moyen de composés carbonyle $\alpha$, $\beta$ insaturés et transformées ensuite partiellement ou totalement, au moyen d'agents de déshydratation, en anhydrides intermoléculaires correspondants, en vue de préparer des agents d'encollage pour papier.

4. Agents d'encollage pou papier sous form de dispersions aqueuses, caractérisés en ce qu'ils comprennent des résines de colophane modifiées selon la revendication 1.

**Revendications pour l'Etat contractant suivant : ES**

1. Procédé de préparation de résines de colophane modifiées, caractérisé en ce que l'on renforce des résines de colophane le cas échéant préalablement traitées, notamment de la résine d'huile de pin et/ou de la résine balsamique, dans un ordre quelconque,au moyen de composés carbonyle $\alpha$, $\beta$ insaturés et on les transforme au moyen d'agents de déshydratation, partiellement ou totalement, en anhydrides intermoléculaires correspondants.

2. Utilisation de résines de colophane modifiées, obtenue selon la revendication 1, en vue de préparer des agents d'encollage pour papier.

3. Agents d'encollage pour papier sous form de dispersions aqueuses, caractérisés en ce qu'ils contiennent des résines de colophane modifiées, préparées selon la revendication 1.